# EUROPEAN PATENT APPLICATION

(11) **EP 4 852 185 A1**
(43) Date of publication of application: **09.12.2026**
(21) Application number: 24950945.6
(22) Date of filing: 12.08.2024
(51) Int. Cl.: H01M 50/30, H01M 50/333

(54) **BATTERY DEVICE AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); SUN, Liutao, Ningde, Fujian 352100 (CN); LI, Yao, Ningde, Fujian 352100 (CN); GU, Mingguang, Ningde, Fujian 352100 (CN); CHEN, Shilong, Ningde, Fujian 352100 (CN); CHAI, Jing, Ningde, Fujian 352100 (CN); BAO, Luru, Ningde, Fujian 352100 (CN); KE, Jianhuang, Ningde, Fujian 352100 (CN); LI, Wei, Ningde, Fujian 352100 (CN)
(74) Representative: Kraus & Lederer PartGmbB
(86) International application number: PCT/CN2024/111555
(87) International publication number: WO 2026/036257

(57) **Abstract**

A battery device (2) and an electric device. The battery device (2) comprises battery cells (6) and a case (5), wherein the case (5) has an accommodating space (53), the battery cells (6) are arranged in the accommodating space (53), the case (5) is provided with a venting mechanism (8), and the venting mechanism (8) is configured to communicate the accommodating space (53) with the outside. In an open state, the venting mechanism (8) comprises a group of slits, wherein the group of slits comprises at least one first slit (81), and the maximum dimension of each first slit (81) in the direction of width is A, satisfying 0.03 mm≤A≤0.8 mm; and/or the venting mechanism (8) comprises a group of circular holes, wherein the group of circular holes comprises at least one first circular hole (82), and the diameter of each first circular hole (82) is R, satisfying 0.03 mm≤R≤0.8 mm. By means of providing the first slits (81) and/or the first circular holes (82) in the venting mechanism (8), and adjusting the dimensions of the first slits (81) and/or the first circular holes (82) to be within a preset range, electrolyte vapor generated by the battery cells (6) under thermal runaway conditions can be discharged at a relatively high flow rate, and the electrolyte vapor diffuses rapidly, can be quickly evaporated, and is less likely to be condensed into fume, thereby being conducive to improving the use experience of the battery device.

## Description

### TECHNICAL FIELD

The present application relates to the field of battery technologies, and in particular, to a battery device and an electric device.

### BACKGROUND

A battery has advantages such as high specific energy and high power density, and is widely used in an electronic device and a transportation vehicle, such as mobile phones, notebook computers, electric bicycles, electric vehicles, electric airplanes, electric ships, and electric tools.

With the continuous development of battery technologies, an application range of batteries is becoming wider and wider, and people's requirements for use experience of batteries are becoming higher and higher.

### SUMMARY

In view of the foregoing problem, the present application provides a battery device and an electric device, and the battery device has good use experience.

According to a first aspect, some embodiments of the present application provide a battery device. The battery device comprises a battery cell and a case body, the case body has an accommodating space, and the battery cell is disposed in the accommodating space. The case body is provided with a venting mechanism, and the venting mechanism is configured to communicate the accommodating space with the outside. In an open state, the venting mechanism comprises a group of slits, wherein the group of slits comprises at least one first slit, the maximum dimension of each first slit in the width direction is A, and 0.03 mm≤A≤0.8 mm; and/or the venting mechanism comprises a group of circular holes, wherein the group of circular holes comprises at least one first circular hole, the diameter of each first circular hole is R, and 0.03 mm≤R≤0.8 mm.

In the foregoing structure, the venting mechanism forms the first slit and/or the first circular hole for discharging gas in the accommodating space to the outside atmosphere, a range of the dimension A of the first slit in the width direction is 0.03 mm≤A≤0.8 mm, and a range of the diameter R of the first circular hole is 0.03 mm≤R≤0.8 mm. Therefore, electrolyte vapor generated by the battery cell in a thermal runaway state can be discharged at a high flow rate, and the electrolyte vapor diffuses rapidly, can be rapidly evaporated, and is less likely to be condensed into fume, thereby being conducive to improving use experience of the battery device.

According to the battery device provided in some embodiments of the present application, when the venting mechanism comprises the group of slits, the case body comprises a first case wall, the venting mechanism comprises a lid body and a venting hole that is disposed in the first case wall, the lid body is connected to the first case wall and is spaced apart from the first case wall in the axial direction of the venting hole, a first slit is formed between the lid body and the first case wall, and the first slit is communicated with the accommodating space through the venting hole. The first slit communicated with the venting hole is formed between the lid body and the first case wall, so that the first slit is communicated with the accommodating space, and electrolyte vapor in the accommodating space can diffuse into the outside air through the venting hole and the first slit.

According to the battery device provided in some embodiments of the present application, the venting mechanism further comprises a valve seat, the lid body is connected to the first case wall through the valve seat, and the lid body is located on the side of the first case wall away from the accommodating space. By providing the lid body on the side of the first case wall away from the accommodating space, the electrolyte vapor discharged from the accommodating space can smoothly diffuse into the outside air through the venting hole and the first slit, which is conducive to improving a diffusion effect of the electrolyte vapor in the outside air.

According to the battery device provided in some embodiments of the present application, the valve seat comprises a base body and a support body, the base body is connected to the side of the first case wall away from the accommodating space and is disposed around the outer side of the venting hole to form a communication cavity, the support body is connected to the base body and the lid body, the lid body is disposed at the side of the base body away from the first case wall with a spacing, a first slit is formed between the lid body and the base body, and the first slit is communicated with the venting hole through the communication cavity. In this way, the communication cavity can lead the electrolyte vapor in the accommodating space to the outer side away from the accommodating space, which is conducive to allowing the electrolyte vapor to better diffuse into the outside air away from the outer side of the accommodating space.

According to the battery device provided in some embodiments of the present application, at least a portion of the support body is located in the communication cavity, and the support body is connected to an inner wall surface of the communication cavity and a wall surface of the lid body facing the base body, which is conducive to improving space utilization of the valve seat.

According to the battery device provided in some embodiments of the present application, the valve seat and the lid body are of an integrally molded structure, so that the overall structure of the valve seat and the lid body has good strength.

According to the battery device provided in some embodiments of the present application, when the venting mechanism comprises the group of slits, the venting mechanism comprises a valve seat having a base body, an elastic member, and a lid body, the base body is connected to the case body, the base body has a communication cavity communicated with the accommodating space, and the elastic member is connected between the lid body and the base body and makes the lid body abut against the base body; and the elastic member is configured to deform when internal pressure of the accommodating space reaches a threshold, so that the lid body moves and a first slit communicated with the communication cavity is formed between the lid body and the base body. In this way, when the internal pressure of the accommodating space reaches the threshold, the electrolyte vapor in the accommodating space can be discharged to the outside air through the venting hole, the communication cavity, and the first slit, thereby realizing rapid diffusion in the outside air.

According to the battery device provided in some embodiments of the present application, the valve seat further comprises a support body, the support body and the elastic member are located in the communication cavity, the support body is connected to an inner wall surface of the communication cavity, and the elastic member is connected between the support body and the lid body. The support body and the elastic member are disposed in the communication cavity, which is conducive to improving space utilization.

According to the battery device provided in some embodiments of the present application, a pressure difference between the internal pressure of the accommodating space and pressure of the outside atmosphere is C, the lid body moves and a first slit is formed between the lid body and the base body, and 0.08 kPa≤C≤40 kPa. This not only enables the electrolyte vapor to be discharged from the first slit at a high flow rate under the action of the pressure difference, but also makes it less likely for severe gas buildup to occur in the accommodating space, which is conducive to reducing the possibility of swelling of the battery device.

According to the battery device provided in some embodiments of the present application, the venting mechanism further comprises a limiting structure connected to the base body, a portion of the limiting structure is located at the side of the lid body facing away from the base body and is spaced apart from the lid body, and the limiting structure is able to block the lid body detached from the base body, to limit a distance by which the lid body is detached from the base body.

According to the battery device provided in some embodiments of the present application, the limiting structure comprises a connecting portion, an extending portion, and a blocking portion, the extending portion is connected between the blocking portion and the connecting portion, the connecting portion is connected to the base body, and the blocking portion is located on the side of the lid body facing away from the base body and is configured to block the lid body.

According to the battery device provided in some embodiments of the present application, when the lid body abuts against the base body, the distance between the blocking portion and the lid body is A in an arrangement direction of the lid body and the base body, so that a distance by which the blocking portion is detached from the base body can be limited to A, and thus the lid body is detached from the base body, and the dimension of a first slit formed between the base bodies in the width direction is A.

According to the battery device provided in some embodiments of the present application, when the venting mechanism comprises the group of slits, 0.05 mm≤A≤0.5 mm; and/or when the venting mechanism comprises the group of circular holes, 0.05 mm≤R≤0.5 mm.

According to the battery device provided by some embodiments of the present application, a protrusion structure is provided at the first slit, so that airflow is more likely to form turbulence when flowing out of the first slit. This is conducive to improving diffusivity of the electrolyte vapor, allowing the electrolyte vapor to evaporate more rapidly, and making it less likely for the electrolyte vapor to form fume when being discharged from the first slit.

According to the battery device provided by some embodiments of the present application, the case body comprises a first case wall and a second case wall, the second case wall encloses the accommodating space, and the first case wall is connected to the second case wall and encloses a venting space with the second case wall; and the battery device further comprises a pressure relief mechanism, the pressure relief mechanism is disposed in the second case wall and is configured to communicate the accommodating space with the venting space, and the venting mechanism is disposed in the first case wall. The venting mechanism is disposed in the first case wall located on the outer side of the second case wall and the pressure relief mechanism is disposed in the second case wall, so that providing the venting mechanism in the first case wall does not affect sealing of the accommodating space enclosed by the second case wall.

According to the battery device provided by some embodiments of the present application, when the venting mechanism comprises the group of slits, the total cross-sectional area of the group of slits is B, and 30 mm²≤B≤100 mm²; and/or when the venting mechanism comprises the group of circular holes, the total cross-sectional area of the group of circular holes is B, and 30 mm²≤D≤100 mm². This not only prevents the electrolyte vapor from accumulating in the accommodating space and allows the electrolyte vapor to be smoothly discharged, but also prevents the venting mechanism from experiencing a reduced discharge speed of the electrolyte vapor due to an excessively large ventilation area or from failing to smoothly discharge the electrolyte vapor in the accommodating space due to an excessively small ventilation area, which causes a safety problem due to excessively large pressure in the accommodating space.

According to the battery device provided by some embodiments of the present application, when the venting mechanism comprises the group of slits, there are a plurality of first slits, and the plurality of first slits are spaced apart from each other; and/or when the venting mechanism comprises the group of circular holes, there are a plurality of first circular holes, and the plurality of first circular holes are spaced apart from each other. This makes distribution of the first slits or the first circular holes dispersed, which is conducive to improving uniformity of venting.

According to a second aspect, some embodiments of the present application provide an electric device. The electric device comprises the battery device provided by any one of the foregoing technical solutions. The battery device is configured to provide electric energy.

The technical solutions provided in embodiments of the present application have at least the following beneficial effects.

Some embodiments of the present application provide a battery device. The battery device comprises a battery cell and a case body, the case body has an accommodating space, and the battery cell is disposed in the accommodating space. The case body is provided with a venting mechanism, and the venting mechanism is configured to communicate the accommodating space with the outside. In an open state, the venting mechanism comprises a group of slits, wherein the group of slits comprises at least one first slit, the maximum dimension of each first slit in the width direction is A, and 0.03 mm≤A≤0.8 mm; and/or the venting mechanism comprises a group of circular holes, wherein the group of circular holes comprises at least one first circular hole, the diameter of each first circular hole is R, and 0.03 mm≤R≤0.8 mm. In the foregoing structure, the venting mechanism forms the first slit and/or the first circular hole for discharging gas in the accommodating space to outside atmosphere, a range of the dimension A of the first slit in the width direction is 0.03 mm≤A≤0.8 mm, and a range of the diameter R of the first circular hole is 0.03 mm≤R≤0.8 mm. Therefore, electrolyte vapor generated by the battery cell in a thermal runaway state can be discharged at a high flow rate, and the electrolyte vapor diffuses rapidly, can be rapidly evaporated, and is less likely to be condensed into fume, thereby being conducive to improving use experience of the battery device.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred embodiments below. The accompanying drawings are used only for the purpose of illustrating the preferred implementations and are not to be construed as limitations on the present application. Moreover, throughout the drawings, identical reference numerals are used to designate identical components. In the accompanying drawings:
FIG. 1 is a schematic diagram of a structure of a vehicle according to some embodiments of the present application;
FIG. 2 is an exploded view of a battery device according to some embodiments of the present application;
FIG. 3 is an exploded view of a partial structure of a battery device according to some embodiments of the present application;
FIG. 4 is an enlarged view of a venting port in a battery device according to some embodiments of the present application;
FIG. 5 is an enlarged view of a venting port in a battery device according to some other embodiments of the present application;
FIG. 6 is an enlarged view of a venting port in a battery device according to still some other embodiments of the present application;
FIG. 7 is a schematic diagram of an internal structure of a venting mechanism in a battery device according to some embodiments of the present application;
FIG. 8 is a schematic diagram of a structure of a case body in a battery device according to some embodiments of the present application;
FIG. 9 is a schematic diagram of an internal structure of a venting mechanism in a battery device according to some other embodiments of the present application;
FIG. 10 is a schematic diagram of a structure of a lid body in a battery device according to some embodiments of the present application;
FIG. 11 is a schematic diagram of an internal structure of a venting mechanism in a battery device according to still some other embodiments of the present application;
FIG. 12 is a schematic diagram of a structure of a valve seat in a battery device according to some embodiments of the present application;
FIG. 13 is a schematic diagram of an internal structure of a venting mechanism with no venting port formed in a battery device according to yet some other embodiments of the present application;
FIG. 14 is a schematic diagram of an internal structure of a venting mechanism with a venting port formed in a battery device according to still yet some other embodiments of the present application; and
FIG. 15 is a schematic diagram of a structure of a case body in a battery device according to some other embodiments of the present application.

In the accompanying drawings:
1. vehicle; 2. battery device; 3. controller; 4. motor; 5. case body; 51. first case body; 52. second case body; 53. accommodating space; 54. first case wall; 542. venting hole; 55. second case wall; 6. battery cell; 8. venting mechanism; 81. first slit; 82. first circular hole; 811. protrusion structure; 83. lid body; 84. valve seat; 841. base body; 8411. communication cavity; 842. support body; 85. elastic member; 86. limiting structure; 861. connecting portion; 862. extending portion; 863. blocking portion; and 9. pressure relief mechanism.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

In the embodiment of the present application, "parallel" includes not only an absolutely parallel case, but also a substantially parallel case conventionally recognized in engineering; and "perpendicular" includes not only an absolutely perpendicular case, but also a substantially perpendicular case conventionally recognized in engineering. For example, the angle between two directions is 85° to 90°, and the two directions may be considered to be perpendicular; and the angle between two directions is 0° to 5°, and the two directions may be considered to be parallel.

The term "a plurality of" in the present application refers to more than two (including two).

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields.

A battery device mentioned in the embodiments of the present application refers to a single physical module including one or a plurality of battery cells to provide a higher voltage and capacity.

A battery cell may be a secondary battery cell. The secondary battery cell is a battery cell that can be continuously used by activating an active material by means of charging the battery cell after the battery cell is discharged.

The battery cell may be a lithium ion battery cell, a sodium ion battery cell, a sodium-lithium ion battery cell, a lithium metal battery cell, a sodium metal battery cell, a lithium-sulfur battery cell, a magnesium ion battery cell, a nickel-hydrogen battery cell, a nickel-cadmium battery cell, a lead-acid battery cell, or the like.

As an example, the battery cell may be a cylindrical battery cell, a prismatic battery cell, a pouch battery cell, or a battery cell with another shape. The prismatic battery cell includes a square-casing battery cell, a blade-shaped battery cell, and a polygon prism battery cell, for example, a hexagonal prism battery cell and the like.

In some embodiments, the battery device may be a battery module; and when there are a plurality of battery cells, the plurality of battery cells are arranged and fixed to form a battery module.

In some embodiments, the battery device may be a battery pack including a case body and a battery cell, and the battery cell or the battery module is accommodated in the case body.

In some embodiments, the case body may be a portion of a chassis structure of a vehicle. For example, a portion of the case body may be at least a portion of a floor of a vehicle, or a portion of the case body may be at least a portion of a cross beam and a longitudinal bea of a vehicle.

In some embodiments, the battery device may be an energy storage device. The energy storage device includes an energy storage container, an energy storage cabinet, and the like.

During use of the battery device, the battery cell inside the battery device has a risk of thermal runaway. When the battery cell experiences thermal runaway, electrolyte in the battery cell evaporates, a large amount of electrolyte vapor is mixed in thermal runaway gas, and the electrolyte vapor condenses into fume in a process of being discharged from the battery device, which not only reduces visibility of the surroundings, but also seriously affects use experience of the battery device.

In order to improve use experience of the battery device, some embodiments of the present application provide a battery device. The battery device includes a battery cell and a case body, the case body has an accommodating space, and the battery cell is disposed in the accommodating space. The case body is provided with a venting mechanism, and the venting mechanism is configured to communicate the accommodating space with the outside. In an open state, the venting mechanism includes a group of slits, where the group of slits includes at least one first slit, the maximum dimension of each first slit in the width direction is A, and 0.03 mm≤A≤0.8 mm; and/or the venting mechanism includes a group of circular holes, where the group of circular holes includes at least one first circular hole, the diameter of each first circular hole is R, and 0.03 mm≤R≤0.8 mm. In the foregoing structure, the venting mechanism forms the first slit and/or the first circular hole for discharging gas in the accommodating space to the outside atmosphere, a range of the dimension A of the first slit in the width direction is 0.03 mm≤A≤0.8 mm, and a range of the diameter R of the first circular hole is 0.03 mm≤R≤0.8 mm. By providing the first slit and/or the first circular hole in the venting mechanism and adjusting the dimension of the first slit and/or the first circular hole to a preset range, electrolyte vapor generated by the battery cell in a thermal runaway state can be discharged at a high flow rate after the first slit and/or the first circular hole are/is adjusted, can be rapidly evaporated, and is less likely to be condensed into fume, thereby being conducive to improving use experience of the battery device.

The battery device described in the embodiments of the present application is applicable to an electric device using the battery device.

The electric device may be a vehicle, a mobile phone, a portable device, a notebook computer, a ship, a spacecraft, an electric toy, an electric tool, and the like. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like. In the embodiments of the present application, the above described electric device is not particularly limited.

To facilitate the description, in the following embodiments, as an example for description, an electric device in an embodiment of the present application is a vehicle.

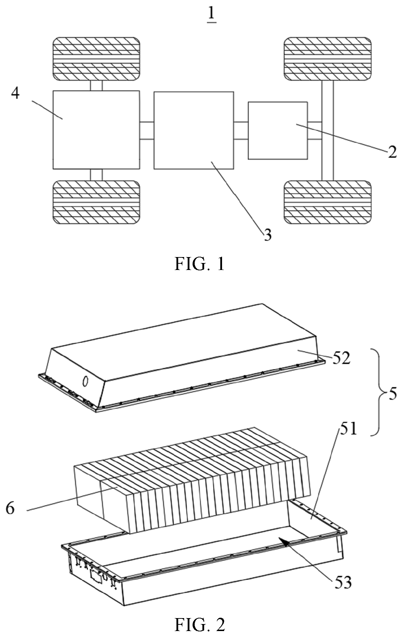

FIG. 1 is a schematic diagram of a structure of a vehicle according to some embodiments of the present application.

As shown in FIG. 1, a battery device 2 is disposed inside a vehicle 1, and the battery device 2 may be disposed at the bottom, head, or tail of the vehicle 1. The battery device 2 may be configured to power the vehicle 1. For example, the battery device 2 may be used as an operating power source of the vehicle 1.

The vehicle 1 may further include a controller 3 and a motor 4, and the controller 3 is configured to control the battery device 2 to power the motor 4, for example, for a working power requirement of the vehicle 1 during starting, navigating, and traveling.

In some embodiments of the present application, the battery device 2 may be used not only as an operating power source for the vehicle 1, but also as a driving power source for the vehicle 1, instead of or partially instead of fuel or natural gas to provide driving power for the vehicle 1.

FIG. 2 is an exploded schematic diagram of a battery device according to some embodiments of the present application. As shown in FIG. 2, a battery device 2 includes a case body 5 and a battery cell 6. The battery cell 6 is accommodated in the case body 5. The case body 5 is configured to provide an accommodating space for the battery cell 6. A plurality of battery cells 6 may be provided in the battery device 2, and the plurality of battery cells 6 may be subjected to series connection, parallel connection, or series-parallel connection. The series-parallel connection means that the plurality of battery cells 6 are subjected to both series connection and parallel connection. The plurality of battery cells 6 may be directly connected in series, in parallel, or in a combination of both, and then the whole composed of the plurality of battery cells 6 is accommodated in the case body 5. Certainly, the battery device 2 may alternatively be formed in a manner that the plurality of battery cells 6 are subjected to series connection, parallel connection, or series-parallel connection to form battery modules, and the plurality of battery modules are then subjected to series connection, parallel connection, or series-parallel connection to form an integrated unit, which is accommodated in the case body 5.

The case body 5 may include a first case body 51 and a second case body 52. The first case body 51 and the second case body 52 fit to each other to define an accommodating space 53 for accommodating the battery cells 6. The first case body 51 and the second case body 52 may have various shapes, for example, a rectangular parallelepiped shape, a cylindrical shape, or the like. The first case body 51 may be of a hollow structure with one side open, the second case body 52 may also be of a hollow structure with one side open, and the open side of the second case body 52 is fitted to the open side of the first case body 51 in a covered manner to form the case body 5 having an accommodating space 53.

The battery device 2 may further include other structures. For example, the battery device 2 may further include a busbar component for implementing an electrical connection between the plurality of battery cells 6.

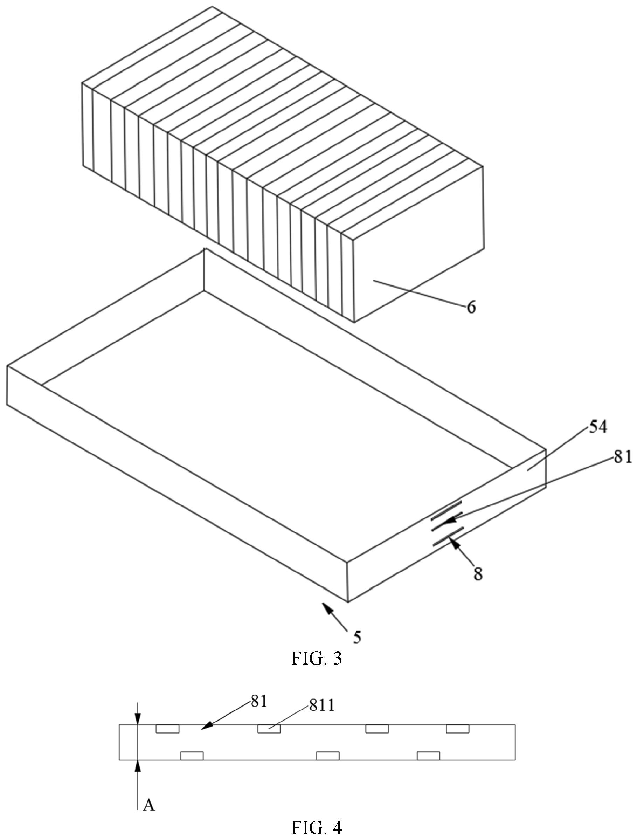

As shown in FIG. 3, some embodiments of the present application provide a battery device 2. The battery device 2 includes a battery cell 6 and a case body 5, the case body 5 has an accommodating space 53, and the battery cell 6 is disposed in the accommodating space 53. The case body 5 is provided with a venting mechanism 8, and the venting mechanism 8 is configured to communicate the accommodating space 53 with the outside. In an open state, the venting mechanism 8 includes a group of slits, where the group of slits includes at least one first slit 81, and the maximum dimension of each first slit 81 in the width direction is A, and 0.03 mm≤A≤0.8 mm; and/or the venting mechanism 8 includes a group of circular holes, where the group of circular holes includes at least one first circular hole 82, and the diameter of each first circular hole 82 is R, and 0.03 mm≤R≤0.8 mm.

The battery cell 6 may be a smallest unit capable of outputting electric energy to the outside as an independent power source. The case body 5 may be a component for enclosing the accommodating space 53, and the battery cell 6 is disposed in the accommodating space 53 in the case body 5. The case body 5 may be the first case body 51 described in the foregoing technical solution, or may be the second case body 52 described in the foregoing technical solution. A plurality of battery cells 6 may be provided in the battery device 2, and the plurality of battery cells 6 may be connected in series, in parallel, or in a combination of both to form the whole that is accommodated in the accommodating space 53 of the case body 5.

The venting mechanism 8 may be a mechanism for discharging gas in the accommodating space 53 to the outside air, and is configured to discharge the gas in the accommodating space 53 to the outside air at a high flow rate for rapid diffusion. The venting mechanism 8 is disposed in the case body 5, and forms a structure capable of communicating the accommodating space 53 with the outside air, so that the gas in the accommodating space 53 can be discharged to the outside air.

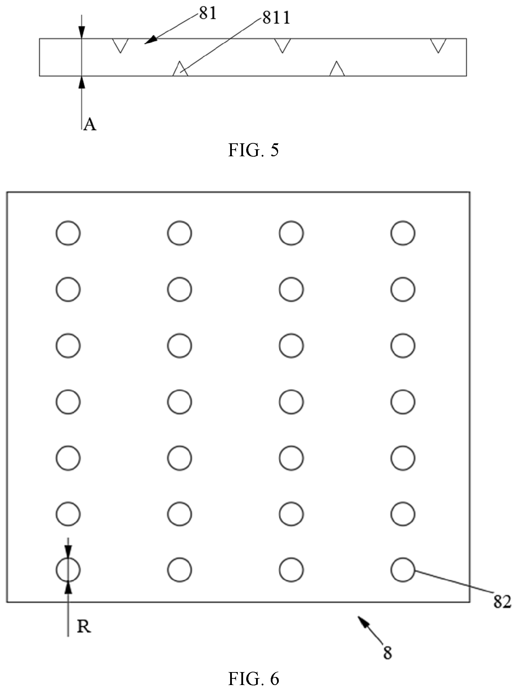

A group of slits may include at least one first slit 81, and the first slit 81 may be a gap whose cross-sectional area is in a long strip shape. In some examples, a gap having a length to width ratio greater than or equal to 10 may be referred to as a slit. The dimension of the first slit 81 in the width direction may be the dimension in the width direction of a cross-sectional shape of the first slit 81 in a direction perpendicular to the gas flow direction. With reference to FIG. 4 and FIG. 5, when the cross-sectional shape of the first slit 81 in the direction perpendicular to the gas flow direction is a rectangle, the dimension in the width direction is the width of the rectangle.

By setting a range of the dimension A of the first slit 81 in the width direction to be 0.03 mm≤A≤0.8 mm, in a process that the gas in the accommodating space 53 is discharged through the first slit 81, the electrolyte vapor in the accommodating space 53 can achieve a high flow rate after the first slit 81 is adjusted, can be rapidly evaporated, and is less likely to be condensed into fume, which is conducive to improving use experience of the battery device 2. In contrast, when the dimension A of the first slit 81 in the width direction is excessively large, for example, greater than 0.8 mm, the flow rate of the electrolyte vapor is reduced, and thus may be likely to be condensed into fume. However, if the dimension A of the first slit 81 in the width direction is excessively small, for example, less than 0.03 mm, it may be likely to cause the electrolyte vapor in the accommodating space to fail to be smoothly discharged, which causes a safety problem due to excessively large pressure in the accommodating space.

A group of circular holes may include at least one first circular hole 82. With reference to FIG. 6, the first circular hole 82 may be a hole-shaped structure with a circular cross-sectional area. By setting a range of the diameter R of the first circular hole 82 to be 0.03 mm≤R≤0.8 mm, in a process that the gas in the accommodating space 53 is discharged through the first circular hole 82, the electrolyte vapor in the accommodating space 53 can achieve a high flow rate after the first circular hole 82 is adjusted, can be rapidly evaporated, and is less likely to be condensed into fume, which is conducive to improving use experience of the battery device 2. In contrast, when the diameter R of the first circular hole 82 is excessively large, for example, greater than 0.8 mm, the flow rate of the electrolyte vapor is reduced, and may be likely to be condensed into fume. However, if the diameter R of the first circular hole 82 is excessively small, for example, less than 0.03 mm, it may be likely to cause the electrolyte vapor in the accommodating space to fail to be smoothly discharged, which causes a safety problem due to excessively large pressure in the accommodating space.

In the foregoing structure, the venting mechanism forms the first slit 81 and/or the first circular hole 82 for discharging the gas in the accommodating space to the outside atmosphere, the range of the dimension A of the first slit 81 in the width direction is 0.03 mm≤A≤0.8 mm, and the range of the diameter R of the first circular hole 82 is 0.03 mm≤R≤0.8 mm. Therefore, the electrolyte vapor generated by the battery cell 6 in a thermal runaway state can achieve a high flow rate after the first slit 81 and/or the first circular hole 82 are/is adjusted, can be rapidly evaporated, and is less likely to be condensed into fume, thereby being conducive to improving use experience of the battery device.

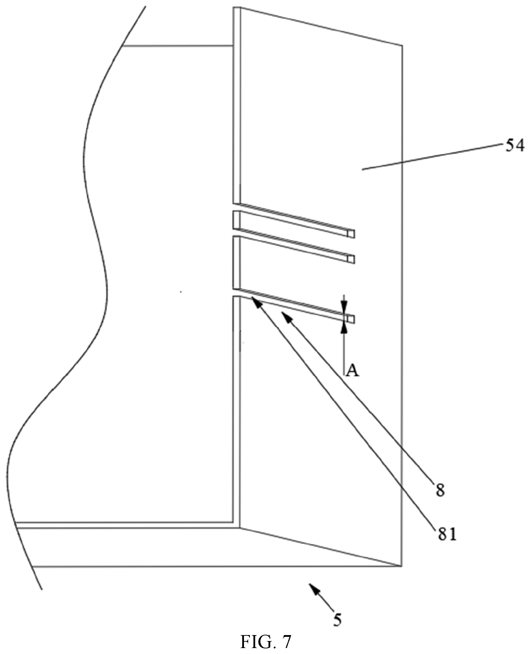

In some embodiments, with reference to FIG. 7, the case body 5 includes a first case wall 54, the venting mechanism 8 includes a first slit 81 disposed in the first case wall 54, and the first slit 81 communicates the outside with the accommodating space 53.

The first case wall 54 may be a wall structure in the case body 5, and the first slit 81 may be an opening of the case body 5 communicated with the outside air. By providing a normally open first slit 81 in the first case wall 54, the first slit 81 communicates the outside with the accommodating space 53, so that the electrolyte vapor in the accommodating space 53 can rapidly diffuse into the outside air through the first slit 81, and is less likely to be condensed into fume, which is conducive to improving use experience of the battery device 2. For example, the venting mechanism 8 may further include a first circular hole 82 disposed in the first case wall 54, and the first circular hole 82 communicates the outside with the accommodating space 53.

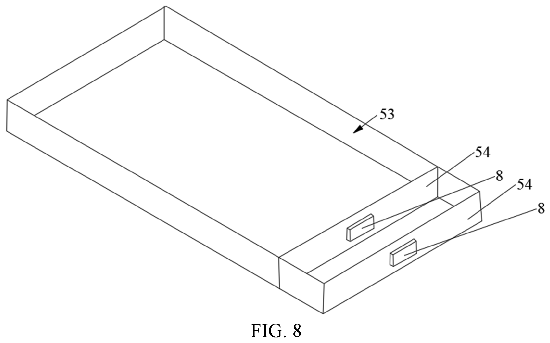

For example, with reference to FIG. 8, a plurality of venting mechanisms 8 may be sequentially provided in the flow direction of the electrolyte vapor on a venting path. In some embodiments, a plurality of first case walls 54 provided with venting mechanisms 8 may be provided at intervals in the flow direction of the electrolyte vapor on the venting path, and the electrolyte vapor in the accommodating space 53 can sequentially flow through the venting mechanisms 8 in the plurality of first case walls 54 and be discharged to the outside of the case body 5.

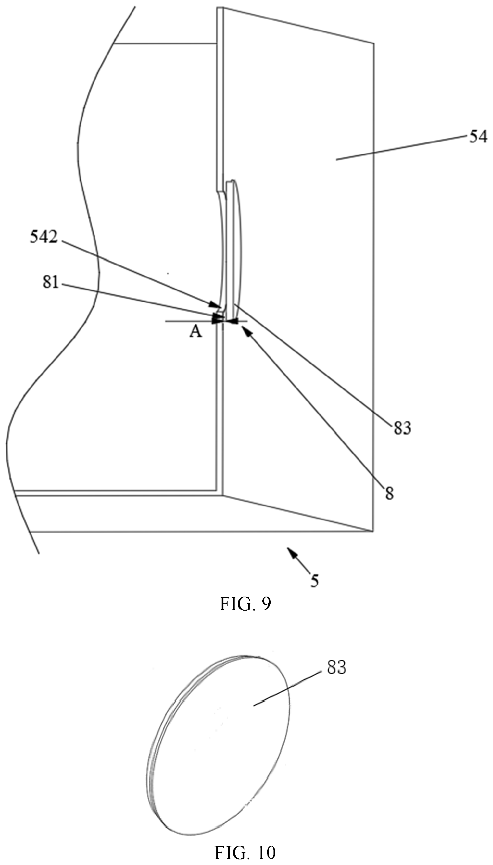

In some embodiments, with reference to FIG. 9, the case body 5 includes a first case wall 54, and when the venting mechanism 8 includes a group of slits, the venting mechanism 8 includes a lid body 83 and a venting hole 542 that is disposed in the first case wall 54, the lid body 83 is connected to the first case wall 54 and is spaced apart from the first case wall 54 in the axial direction of the venting hole 542, a first slit 81 is formed between the lid body 83 and the first case wall 54, and the first slit 81 is communicated with the accommodating space 53 through the venting hole 542.

The first case wall 54 may be a wall structure in the case body 5. The venting hole 542 may be a through-hole structure provided in the first case wall 54, and is configured to communicate the accommodating space 53 with the outside air. With reference to FIG. 10, the lid body 83 may be a plate structure spaced apart from the first case wall 54, and the lid body 83 is spaced apart from the first case wall 54 in the axial direction of the venting hole 542 and is disposed opposite to the venting hole 542, so that a first slit 81 communicated with the venting hole 542 is formed between the lid body 83 and the first case wall 54. In this way, the first slit 81 is communicated with the accommodating space 53, so that the electrolyte vapor in the accommodating space 53 can diffuse into the outside air through the venting hole 542 and the first slit 81.

For example, the lid body 83 may be located in the accommodating space 53 and spaced apart from the first case wall 54 in the axial direction of the venting hole 542. The lid body 83 may alternatively be located on the side of the first case wall 54 facing away from the accommodating space 53 and spaced apart from the first case wall 54 in the axial direction of the venting hole 542.

In some embodiments, the lid body 83 may face the venting hole 542 in the axial direction of the venting hole 542, so that the first slit 81 has a cylindrical structure surrounding the venting hole 542, allowing for smooth venting of the first slit 81 in all radial directions.

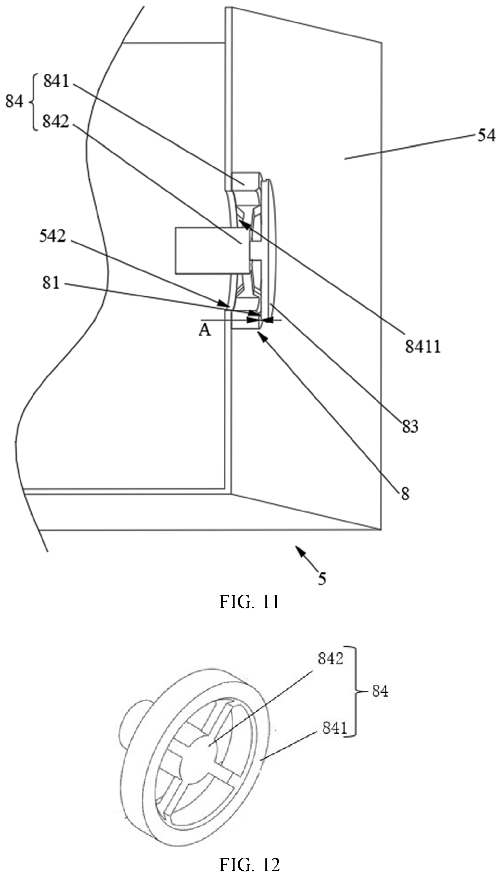

In some embodiments, with reference to FIG. 11, the venting mechanism 8 further includes a valve seat 84, the lid body 83 is connected to the first case wall 54 through the valve seat 84, and the lid body 83 is located on the side of the first case wall 54 away from the accommodating space 53.

The valve seat 84 may be a component for connecting the lid body 83 to the first case wall 54, which enables the lid body 83 to be firmly connected to the first case wall 54, which is conducive to maintaining shape stability of the first slit 81.

By providing the lid body 83 on the side of the first case wall 54 away from the accommodating space 53, the electrolyte vapor discharged from the accommodating space 53 can smoothly diffuse into the outside air through the venting hole 542 and the first slit 81, which is conducive to improving a diffusion effect of the electrolyte vapor in the outside air.

For example, the valve seat 84 may be welded to the side of the first case wall 54 facing away from the accommodating space 53, or may be bonded to the side of the first case wall 54 facing away from the accommodating space 53. For example, the valve seat 84 may alternatively be connected to the side of the first case wall 54 facing away from the accommodating space 53 by means of a connecting bolt, a connecting pin, or the like.

In some embodiments, with reference to FIG. 12, the valve seat 84 includes a base body 841 and a support body 842, the base body 841 is connected to the side of the first case wall 54 away from the accommodating space 53 and is disposed around the outer side of the venting hole 542 to form a communication cavity 8411, the support body 842 is connected to the base body 841 and the lid body 83, the lid body 83 is disposed at the side of the base body 841 away from the first case wall 54 with a spacing, a first slit 81 is formed between the lid body 83 and the base body 841, and the first slit 81 is communicated with the venting hole 542 through the communication cavity 8411.

The base body 841 may be a main structure in the valve seat 84, and is configured to be connected to the side of the first case body 51 away from the accommodating space 53. The support member may be a structure in the valve seat 84, which is connected to the base body 841 and is configured to be connected to the lid body 83 to support the lid body 83.

Because the base body 841 is connected to the side of the first case body 51 away from the accommodating space 53, and the lid body 83 is connected to the base body 841 through the valve seat 84 and is disposed at the side of the base body 841 away from the first case wall 54 with a spacing, the first slit 81 is formed between the lid body 83 and the base body 841. The base body 841 is disposed around the outer side of the venting hole 542, so that the base body 841 forms a communication cavity 8411 with openings at two ends. The opening at one end is communicated with the accommodating space 53 through the venting hole 542, and the opening at the other end is communicated with the first slit 81, so that the communication cavity 8411 can lead the electrolyte vapor in the accommodating space 53 to the outer side away from the accommodating space 53, which is conducive to making the electrolyte vapor better diffuse into the outside air away from the outer side of the accommodating space 53.

In some embodiments, at least a portion of the support body 842 is located in the communication cavity 8411, and the support body 842 is connected to an inner wall surface of the communication cavity 8411 and a wall surface of the lid body 83 facing the base body 841.

By providing at least a portion of the support body 842 in the communication cavity 8411, the support body 842 is connected between the inner wall surface of the communication cavity 8411 and the wall surface of the lid body 83 facing the base body 841, which is conducive to improving space utilization of the valve seat 84.

In some embodiments, the valve seat 84 and the lid body 83 are of an integrally molded structure.

The valve seat 84 and the lid body 83 are of an integrally molded structure, which may be that the valve seat 84 and the lid body 83 are manufactured by using an integral molding processing method such as injection molding, so that the valve seat 84 and the lid body 83 can be integrally and synchronously manufactured, which not only facilitates processing and manufacturing of the valve seat 84 and the lid body 83, but also enables the overall structure of the valve seat 84 and the lid body 83 to have good strength. For example, the valve seat 84 and the lid body 83 may alternatively be manufactured by machining one piece blank by using a machining method such as milling.

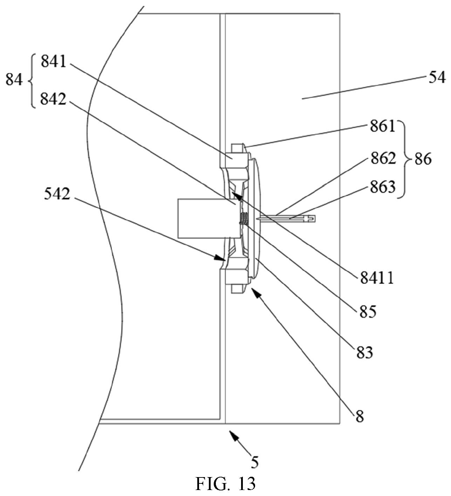

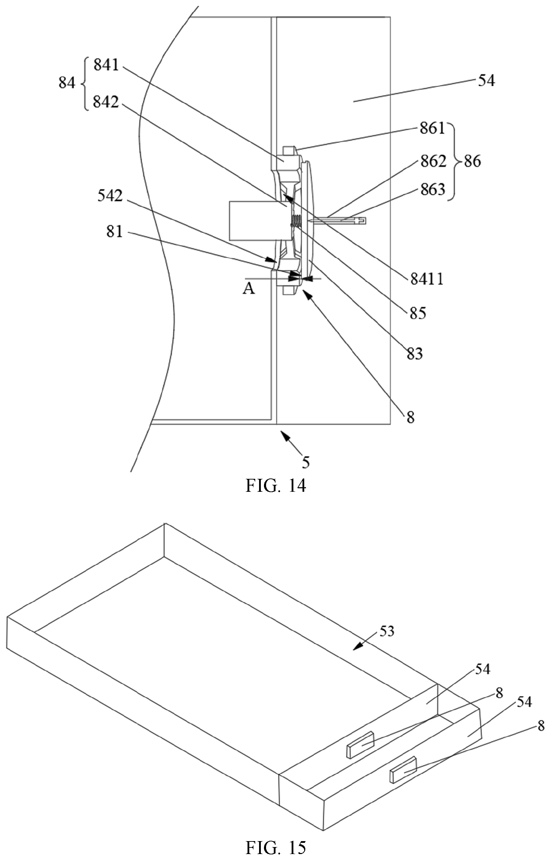

In some embodiments, with reference to FIG. 13, when the venting mechanism 8 includes a group of slits, the venting mechanism 8 includes a valve seat 84 having a base body 841, an elastic member 85, and a lid body 83, the base body 841 is connected to the case body 5, the base body 841 has a communication cavity 8411 communicated with the accommodating space 53, and the elastic member 85 is connected between the lid body 83 and the base body 841 and makes the lid body 83 abut against the base body 841. With reference to FIG. 14, the elastic member 85 is configured to deform when internal pressure of the accommodating space 53 reaches a threshold, so that the lid body 83 moves and a first slit 81 communicated with the communication cavity 8411 is formed between the lid body 83 and the base body 841.

The base body 841 may be the base body 841 in the valve seat 84 provided in the foregoing technical solution, and is connected to the case body 5 and encloses a communication cavity 8411. The communication cavity 8411 is communicated with the accommodating space 53 through the venting hole 542 disposed in the case body 5. The lid body 83 may be the lid body 83 provided in the foregoing technical solution, and is disposed on the side of the base body 841 away from the first case wall 54.

The elastic member 85 may be a component that can utilize its own elastic restoring force to make the lid body 83 abut against the base body 841. The elastic member 85 is connected to the lid body 83 and the base body 841, so that the lid body 83 can abut against the base body 841 to cover an opening of the communication cavity 8411 facing away from the accommodating space 53.

By configuring the elastic member 85 to elastically deform when the internal pressure of the accommodating space 53 reaches the threshold, the lid body 83 can move when the internal pressure of the accommodating space 53 reaches the threshold, to form the first slit 81 communicated with the communication cavity 8411 between the lid body 83 and the base body 841. In this way, when the internal pressure of the accommodating space 53 reaches the threshold, the electrolyte vapor in the accommodating space 53 can be discharged to the outside air through the venting hole 542, the communication cavity 8411, and the first slit 81, thereby realizing rapid diffusion in the outside air.

In some embodiments, the valve seat 84 further includes a support body 842, the support body 842 and the elastic member 85 are located in the communication cavity 8411, the support body 842 is connected to an inner wall surface of the communication cavity 8411, and the elastic member 85 is connected between the support body 842 and the lid body 83.

The support member may be the support body 842 in the valve seat 84 provided in the foregoing technical solution, and is configured to support the lid body 83. The elastic member 85 is connected between the support body 842 and the lid body 83, so that the valve seat 84 can better support the lid body 83 through the support body 842. The support body 842 and the elastic member 85 are disposed in the communication cavity 8411, which is conducive to improving space utilization.

In some embodiments, when a pressure difference between the internal pressure of the accommodating space 53 and pressure of the outside atmosphere is C, the lid body 83 moves and a first slit 81 is formed between the lid body 83 and the base body 841, and 0.08 kPa≤C≤40 kPa.

When the pressure difference between the internal pressure of the accommodating space 53 and the pressure of the outside atmosphere is C, for example, when an explosion-proof valve is opened to release pressure due to thermal runaway of at least one battery cell 6 in the accommodating space 53, causing the pressure difference between the internal pressure of the accommodating space 53 and the pressure of the outside atmosphere to be C, the lid body 83 is detached from the base body 841 under the action of internal gas of the accommodating space 53, and moves in a direction away from the accommodating space 53, so that a gap is formed between the lid body 83 and the base body 841, thereby forming the first slit 81.

When the pressure difference between the internal pressure of the accommodating space 53 and the pressure of the outside atmosphere is C, the lid body 83 moves and the first slit 81 is formed between the lid body 83 and the base body 841, so that the electrolyte vapor in the accommodating space 53 can be discharged from the first slit 81 at a higher flow rate under the action of the pressure difference, and the electrolyte vapor diffuses more rapidly and can be evaporated more rapidly.

A range of the pressure difference C is set to 0.08 kPa≤C≤40 kPa. This not only enables the electrolyte vapor to be discharged from the first slit 81 at a high flow rate under the action of the pressure difference, but also makes it less likely for severe gas buildup to occur in the accommodating space 53, which is conducive to reducing the possibility of swelling of the battery device 2.

In some embodiments, the range of the pressure difference C may be set to 0.1 kPa≤C≤30 kPa. For example, the pressure difference C between the internal pressure of the accommodating space 53 and the pressure of the outside atmosphere may be 10 kPa, 20 kPa, or 25 kPa. This not only enables the electrolyte vapor to be discharged from the first slit 81 at a high flow rate, but also makes it less likely for severe gas buildup to occur in the accommodating space 53, which is conducive to reducing the possibility of swelling of the battery device 2.

In some embodiments, the venting mechanism 8 further includes a limiting structure 86 connected to the base body 841, a portion of the limiting structure 86 is located at the side of the lid body 83 facing away from the base body 841 and is spaced apart from the lid body 83, and the limiting structure 86 can block the lid body 83 detached from the base body 841.

The limiting structure 86 may be a structure in the venting mechanism 8, which is configured to limit a distance by which the lid body 83 is detached from the base body 841. The limiting structure 86 is connected to the base body 841, and a portion of the limiting structure 86 is disposed at the side of the lid body 83 facing away from the base body 841 with a spacing, so that the limiting structure 86 can block the lid body 83 detached from the base body 841, to limit the distance by which the lid body 83 is detached from the base body 841.

In some embodiments, the limiting structure 86 includes a connecting portion 861, an extending portion 862, and a blocking portion 863, the extending portion 862 is connected between the blocking portion 863 and the connecting portion 861, the connecting portion 861 is connected to the base body 841, and the blocking portion 863 is located on the side of the lid body 83 facing away from the base body 841 and is configured to block the lid body 83.

The connecting portion 861, the extending portion 862, and the blocking portion 863 are different portions of the limiting structure 86. The connecting portion 861 is connected to the base body 841, and the extending portion 862 is connected between the blocking portion 863 and the connecting portion 861, so that the blocking portion 863 can be located on the side of the lid body 83 facing away from the base body 841 under the support and guidance of the extending portion 862, so that the blocking portion 863 can block the lid body 83 from the side away from the base body 841.

For example, the limiting structure 86 may be of an integrally molded structure.

The limiting structure 86 is of an integrally molded structure, which may be that the connecting portion 861, the extending portion 862, and the blocking portion 863 are manufactured by using an integral molding processing method such as injection molding, so that the connecting portion 861, the extending portion 862, and the blocking portion 863 can be integrally and synchronously manufactured, which not only facilitates processing and manufacturing of the limiting structure 86, but also enables the overall structure of the limiting structure 86 to have good strength. For example, the limiting structure 86 may alternatively be manufactured by machining one piece blank by using a machining method such as milling.

In some embodiments, when the lid body 83 abuts against the base body 841, the distance between the blocking portion 863 and the lid body 83 is A in an arrangement direction of the lid body 83 and the base body 841.

When the lid body 83 abuts against the base body 841, the distance between the blocking portion 863 and the lid body 83 is set to A in the arrangement direction of the lid body 83 and the base body 841, so that a distance by which the blocking portion 863 is detached from the base body 841 can be limited to A, and thus the lid body 83 is detached from the base body 841, and the dimension of a first slit 81 formed between the base bodies 841 in the width direction is A.

For example, when the venting mechanism 8 includes a group of slits, a range of the dimension A of a first slit 81 in the width direction may be set to 0.05 mm≤A≤0.5 mm. For example, the dimension A of the first slit 81 in the width direction may be 0.2 mm, 0.3 mm, or 0.4 mm. This not only makes the dimension of the first slit 81 in the width direction small, allowing the electrolyte vapor to achieve a high flow rate when being discharged from the first slit 81, but also makes the first slit 81 have a sufficient dimension in the width direction, so that the electrolyte vapor is less likely to accumulate in the accommodating space 53 and can be discharged smoothly.

For example, when the venting mechanism 8 includes a group of circular holes, a range of the diameter R of a first circular hole 82 may be set to 0.05 mm≤R≤0.5 mm. For example, the diameter R of the first circular hole 82 may be 0.2 mm, 0.3 mm, or 0.4 mm. This not only makes the dimension of the first circular hole 82 in the width direction small, allowing the electrolyte vapor to achieve a high flow rate when being discharged from the first slit 81, but also makes the first circular hole 82 have a sufficient dimension in the width direction, so that the electrolyte vapor is less likely to accumulate in the accommodating space 53 and can be discharged smoothly.

In some embodiments, with continued reference to FIG. 4 and FIG. 5, a protrusion structure 811 is provided at the first slit 81.

The protrusion structure 811 may be a structure protruding from the edge of the first slit 81 toward the interior of the first slit 81. The protrusion structure 811 is provided at the first slit 81, so that airflow is more likely to form turbulence when flowing out of the first slit 81. This is conducive to improving diffusivity of the electrolyte vapor, allowing the electrolyte vapor to evaporate more rapidly, and making it less likely for the electrolyte vapor to form fume when being discharged from the first slit 81.

For example, a cross-sectional shape of the protrusion structure 811 may be a rectangle, a triangle, or an arc.

In some embodiments, with reference to FIG. 15, the case body 5 includes a first case wall 54 and a second case wall 55, the second case wall 55 encloses the accommodating space 53, and the first case wall 54 is connected to the second case wall 55 and encloses a venting space with the second case wall 55. The battery device 2 further includes a pressure relief mechanism 9, and the pressure relief mechanism 9 is disposed in the second case wall 55. In a closed state, the pressure relief mechanism 9 is configured to maintain waterproof sealing of the accommodating space 53, and when the internal pressure of the accommodating space exceeds a preset pressure value, the pressure relief mechanism 9 is opened and the accommodating space 53 is communicated with the venting space, and the venting mechanism 8 is disposed in the first case wall 54.

The first case wall 54 and the second case wall 55 are both wall structures of the case body 5. The second case wall 55 may be a wall for enclosing the accommodating space 53 for accommodating the battery cell 6, and the first case wall 54 is connected to the second case wall 55 and encloses the venting space with the second case wall 55. By providing the pressure relief mechanism 9 in the second case wall 55 and the venting mechanism 8 in the first case wall 54, when the pressure relief mechanism 9 is opened, the venting mechanism 8 can be communicated with the accommodating space 53 through the venting space and the pressure relief mechanism 9, so that the electrolyte vapor in the accommodating space 53 can enter the outside air after sequentially passing through the pressure relief mechanism 9, the venting space, and the venting mechanism 8.

The pressure relief mechanism 9 may be a mechanism disposed in the second case wall 55 and configured to release the internal pressure of the accommodating space 53, such as a one-way valve or a balance valve. When the internal pressure of the accommodating space 53 reaches or exceeds the preset value, the pressure relief mechanism 9 can reduce the internal pressure of the accommodating space 53 by releasing a release material inside the accommodating space 53 to the outside of the accommodating space 53.

The venting mechanism 8 is disposed in the first case wall 54 located on the outer side of the second case wall 55 and the pressure relief mechanism 9 is disposed in the second case wall 55, so that configuration of the venting mechanism 8 in the first case wall 54 does not affect waterproof sealing of the accommodating space 53 enclosed by the second case wall 55.

For example, a plurality of first case walls 54 provided with venting mechanisms 8 may be provided at intervals, and the plurality of first case walls 54 provided with the venting mechanisms 8 are disposed on the outer side of the second case wall 55 provided with the pressure relief mechanism 9.

In some embodiments, when the venting mechanism 8 includes a group of first slits 81, the total cross-sectional area of the group of first slits 81 is B, and 30 mm²≤B≤100 mm².

By setting a range of the total area B of all first slits 81 in a group of slits to 30 mm²≤B≤100 mm², the electrolyte vapor is prevented from accumulating in the accommodating space 53 caused by an excessively small total area of the group of first slits 81, and thus can be discharged smoothly; and the electrolyte vapor is prevented from having a reduced discharge speed caused by an excessively large total area of the group of first slits 81. The total area B of the group of first slits 81 may be set to 50 mm², 60 mm², or 80 mm², so that the electrolyte vapor is prevented from accumulating in the accommodating space 53 caused by an excessively small total area of the group of first slits 81, and thus can be discharged smoothly; and the electrolyte vapor is prevented from having a reduced discharge speed caused by an excessively large total area of the group of first slits 81.

In some embodiments, when the venting mechanism 8 includes a group of first circular holes 82, the total cross-sectional area of the group of first circular holes 82 is D, and 30 mm²≤D≤100 mm².

By setting a range of the total area D of all first circular holes 82 in a group of circular holes to 30 mm²≤D≤100 mm², the electrolyte vapor is prevented from accumulating in the accommodating space 53 caused by an excessively small total area of the first circular holes 82, and thus can be discharged smoothly; and the electrolyte vapor is prevented from having a reduced discharge speed caused by an excessively large total area of the group of first circular holes 82. The total cross-sectional area D of the group of circular holes 82 may be set to 50 mm², 60 mm², or 80 mm², so that the electrolyte vapor is prevented from accumulating in the accommodating space 53 caused by an excessively small total area of the first circular holes 82, and thus can be discharged smoothly; and the electrolyte vapor is prevented from having a reduced discharge speed caused by an excessively large total area of the group of first circular holes 82.

In some embodiments, when the venting mechanism 8 includes a group of slits, there are a plurality of first slits 81, and the plurality of first slits 81 are spaced apart from each other.

A plurality of first slits 81 are disposed at intervals in the case body 5 of the battery device 2, which may mean that the total area of a group of slits remains unchanged, but the first slits 81 are divided and disposed at intervals, which makes distribution of the first slits 81 dispersed, and is conducive to improving uniformity of venting.

In some embodiments, when the venting mechanism 8 includes a group of circular holes, there are a plurality of first circular holes 82, and the plurality of first circular holes 82 are spaced apart from each other.

A plurality of first circular holes 82 are disposed at intervals in the case body 5 of the battery device 2, which may mean that the total area of a group of circular holes remains unchanged, but the first slits 81 are divided and disposed at intervals, which makes distribution of the first slits 81 dispersed, and is conducive to improving uniformity of venting.

Some embodiments of the present application further provide an electric device. The electric device includes the battery device 2 provided by the foregoing technical solution. The battery device 2 is configured to provide electric energy.

The electric device may be any one of the foregoing devices or systems using the battery device 2.

According to some embodiments of the present application, the present application provides a battery device 2, and the battery device 2 includes a battery cell 6, a case body 5, and a venting mechanism 8. The case body 5 includes a first case wall 54. The venting mechanism 8 includes a valve seat 84, an elastic member 85, a lid body 83, and a venting hole 542 disposed in the first case wall 54. A base body 841 of the valve seat 84 is disposed around the outer periphery of the venting hole 542 to form a communication cavity 8411, a support body 842 of the valve seat 84 is connected to the base body 841, and the elastic member 85 is connected to a lid body 83 and the support body 842. The elastic member 85 is configured to deform when an internal pressure of an accommodating space 53 reaches a threshold, so that the lid body 83 moves, and a first slit 81 communicated with the communication cavity 8411 is formed between the lid body 83 and the base body 841. The dimension of the first slit 81 in the width direction is A, and 0.03 mm≤A≤0.8 mm, so that electrolyte vapor generated by the battery cell 6 in a thermal runaway state can be discharged at a high flow rate through the first slit 81, the electrolyte vapor diffuses rapidly, can be rapidly evaporated, and is less likely to be condensed into fume, thereby being conducive to improving use experience of the battery device 2.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery device, comprising:
a battery cell; and
a case body, wherein the case body has an accommodating space, the battery cell is disposed in the accommodating space, the case body is provided with a venting mechanism, and the venting mechanism is configured to communicate the accommodating space with the outside; and in an open state, the venting mechanism comprises a group of slits, wherein the group of slits comprises at least one first slit, the maximum dimension of each first slit in the width direction is A, and 0.03 mm≤A≤0.8 mm; and/or
the venting mechanism comprises a group of circular holes, wherein the group of circular holes comprises at least one first circular hole, the diameter of each first circular hole is R, and 0.03 mm≤R≤0.8 mm.

2. The battery device according to claim 1, wherein the case body comprises a first case wall, and when the venting mechanism comprises the group of slits, the venting mechanism comprises a lid body and a venting hole that is disposed in the first case wall, the lid body is connected to the first case wall and is spaced apart from the first case wall in the axial direction of the venting hole, a first slit is formed between the lid body and the first case wall, and the first slit is communicated with the accommodating space through the venting hole.

3. The battery device according to claim 2, wherein the venting mechanism further comprises a valve seat, the lid body is connected to the first case wall through the valve seat, and the lid body is located on the side of the first case wall away from the accommodating space.

4. The battery device according to claim 3, wherein the valve seat comprises a base body and a support body, the base body is connected to the side of the first case wall away from the accommodating space and is disposed around the outer side of the venting hole to form a communication cavity, the support body is connected to the base body and the lid body, the lid body is disposed at the side of the base body away from the first case wall with a spacing, a first slit is formed between the lid body and the base body, and the first slit is communicated with the venting hole through the communication cavity.

5. The battery device according to claim 4, wherein at least a portion of the support body is located in the communication cavity, and the support body is connected to an inner wall surface of the communication cavity and a wall surface of the lid body facing the base body.

6. The battery device according to claim 3, wherein the valve seat and the lid body are of an integrally molded structure.

7. The battery device according to claim 1, wherein when the venting mechanism comprises the group of slits, the venting mechanism comprises a valve seat having a base body, an elastic member, and a lid body, the base body is connected to the case body, the base body has a communication cavity communicated with the accommodating space, and the elastic member is connected between the lid body and the base body and makes the lid body abut against the base body; and
the elastic member is configured to deform when internal pressure of the accommodating space reaches a threshold, so that the lid body moves and a first slit communicated with the communication cavity is formed between the lid body and the base body.

8. The battery device according to claim 7, wherein the valve seat further comprises a support body, the support body and the elastic member are located in the communication cavity, the support body is connected to an inner wall surface of the communication cavity, and the elastic member is connected between the support body and the lid body.

9. The battery device according to claim 7, wherein when a pressure difference between the internal pressure of the accommodating space and pressure of outside atmosphere is C, the lid body moves and a first slit is formed between the lid body and the base body, and 0.08 kPa≤C≤40 kPa.

10. The battery device according to claim 7, wherein the venting mechanism further comprises a limiting structure connected to the base body, a portion of the limiting structure is located at the side of the lid body facing away from the base body and is spaced apart from the lid body, and the limiting structure is able to block the lid body detached from the base body.

11. The battery device according to claim 10, wherein the limiting structure comprises a connecting portion, an extending portion, and a blocking portion, the extending portion is connected between the blocking portion and the connecting portion, the connecting portion is connected to the base body, and the blocking portion is located on the side of the lid body facing away from the base body and is configured to block the lid body.

12. The battery device according to claim 11, wherein when the lid body abuts against the base body, the distance between the blocking portion and the lid body is A in an arrangement direction of the lid body and the base body.

13. The battery device according to claim 1, wherein when the venting mechanism comprises the group of slits, 0.05 mm≤A≤0.5 mm; and/or when the venting mechanism comprises the group of circular holes, 0.05 mm≤R≤0.5 mm.

14. The battery device according to claim 1, wherein when the venting mechanism comprises the group of slits, a protrusion structure is provided at the first slit.

15. The battery device according to claim 1, wherein the case body comprises a first case wall and a second case wall, the second case wall encloses the accommodating space, and the first case wall is connected to the second case wall and encloses a venting space with the second case wall; and the battery device further comprises a pressure relief mechanism, the pressure relief mechanism is disposed in the second case wall and is configured to communicate the accommodating space with the venting space, and the venting mechanism is disposed in the first case wall.

16. The battery device according to claim 1, wherein when the venting mechanism comprises the group of slits, the total cross-sectional area of the group of slits is B, and 30 mm²≤B≤100 mm²; and/or when the venting mechanism comprises the group of circular holes, the total cross-sectional area of the group of circular holes is B, and 30 mm²≤D≤100 mm².

17. The battery device according to claim 1, wherein when the venting mechanism comprises the group of slits, there are a plurality of first slits, and the plurality of first slits are spaced apart from each other; and/or when the venting mechanism comprises the group of circular holes, there are a plurality of first circular holes, and the plurality of first circular holes are spaced apart from each other.

18. An electric device, comprising the battery device according to any one of claims 1 to 17, wherein the battery device is configured to provide electric energy.
